Europäisches Patentamt

European Patent Office

Office européen des brevets

(19)

(11) Veröffentlichungsnummer: **0 103 676**
**B1**

(12) ## EUROPÄISCHE PATENTSCHRIFT

(45) Veröffentlichungstag der Patentschrift:
02.09.87

(51) Int. Cl.⁴: **F 16 L 27/06**, F 01 N 7/18

(21) Anmeldenummer: **83105122.2**

(22) Anmeldetag: **24.05.83**

(54) Dichtungsring.

(30) Priorität: **16.09.82 DE 3234376**

(43) Veröffentlichungstag der Anmeldung:
**28.03.84 Patentblatt 84/13**

(45) Bekanntmachung des Hinweises auf die Patenterteilung:
**02.09.87 Patentblatt 87/36**

(84) Benannte Vertragsstaaten:
**DE FR GB IT SE**

(56) Entgegenhaltungen:
**DE-A-1 526 557**
**DE-A-2 935 414**
**DE-A-3 107 920**
**GB-A-1 003 540**
**US-A-3 276 795**
**US-A-4 209 177**

(73) Patentinhaber: **GOETZE AG, Bürgermeister-**
**Schmidt- Strasse 17, D-5093 Burscheid 1 (DE)**

(72) Erfinder: **Baasner, Ernst, Maisburgstrasse 25,**
**D-4019 Monheim (DE)**
Erfinder: **Lönne, Klaus, Dipl.- Ing., Asternweg 2a,**
**D-5093 Burscheid (DE)**
Erfinder: **Majewski, Klaus- Peter, Dipl.- Ing., Am**
**Sportfeld 26, D-5093 Burscheid (DE)**

EP 0 103 676 B1

LIBER, STOCKHOLM 1987

## Beschreibung

Die Erfindung betrifft einen Dichtungsring insbesondere zur Abdichtung gelenkiger Rohrverbindungen, wie insbesondere einen hochtemperaturbeständigen Dichtungsring zur Abdichtung gelenkig verbundener Auspuffleitungen mit mindestens einer als Gleitfläche dienenden Mantelfläche, bestehend aus einem Material enthaltend miteinander verpreßter Fasern und Gleitmittel.

Aus beispielsweise dem DE-U-1 736 840 ist es bekannt, die Rohrenden von Abgasauslaßrohr und Abgassammelrohr zur Vermeidung der Übertragung der vom Motor ausgehenden Schwingungen gelenkig zu verbinden. Benutzt wird hierzu ein Rohrkupplungssystem nach dem bekannten Kugelpfannenprinzip, nach dem die Verbindungsstellen der Rohre als ineinanderpassende Kugel- beziehungsweise Kugelschalensegmente ausgeführt sind, so daß eine gewisse Winkelbeweglichkeit beziehungsweise Relativbewegung der Rohre zueinander ausgeglichen wird. Der dazwischen geschaltete Dichtungsring ist der Kontur der Gelenkverbindung angepaßt und besitzt an mindestens einer seiner Mantelflächen die Kontur des passenden Kugel- beziehungsweise Kugelschalensegmentes und somit die Funktion eines Gleitlagers der Rohre.

Derartige Dichtringe bestehen entsprechend ihrer Funktion aus Gleitwerkstoffen, und zwar werden heute nach der DE-A-2 829 333, der DE-B-2 845 949 oder der DE-A-3 107 920 bevorzugt verpreßte Gleitmaterialien mit zur Verstärkung eingelagerten, relativ langen Metallfasern verwendet. Die verwendeten Metallfasern sollen nach der DE-B-2 845 949 zweckmäßigerweise langsträhnig sein, damit die Ringe eine ausreichende Festigkeit erhalten. Nach der DE-A-2 829 333 besteht entsprechend das Metallfaserskelett aus einem auf die entsprechende Form gewickelten beziehungsweise gefalteten Stahldrahtgewebe, das nach der Beschichtung mit Graphitplattenmaterial in die gewünschte Form verpreßt ist. Bei derartigen Dichtungen ist allerdings das einliegende Drahtgewebe relativ starr. Gerade an den Faltstellen des Drahtgewebes können die Drähte brechen und die Graphitschicht durchstoßen. Diese Drahtspitzen können dann auf den Gleitflächen der Rohre Verschleißspuren erzeugen, von denen eine Zerstörung der Rohre ausgehen kann.

Deshalb verwendet man nach der DE-A-3 107 920 anstelle von einliegenden Drahtgeweben einliegende Metallfaserwolle. So können wesentlich dünnere Metallfasern eingesetzt werden, und durch die unregelmäßige Ausrichtung der Metallfasern wird die Gefahr eines Verschleißens der Dichtfläche weitgehend vermieden.

Nachteilig bei allen aus diesen drei Literaturstellen bekannten Dichtungsringen ist jedoch ihre aufwendige mehrstufige Herstellbarkeit. Zunächst müssen aus den Metallgeweben beziehungsweise Metallfaserwollknäueln die Dichtungsringskelette unter gegebenenfalls Vorpressung geformt werden, danach erfolgt die Durchtränkung und Beschichtung des Metallfaserskeletts mit dem gegebenenfalls in einer Suspension befindlichen festen Gleitmittel und danach erst die Pressung des Ringes in einer Form auf die gewünschte Kontur.

Entsprechend der Herstellung ist das Gleitmaterial über den Querschnitt des Dichtringes ungleichmäßig verteilt und vor allem lediglich an den Oberflächen des Dichtringes als Schicht aufgetragen. Diese Schichten besitzen aber nur eine schwache Haftung am Metallfaserskelett, und sie sind relativ leicht brüchig, so daß die Schichten abbröckeln und abplatzen können. Die dann freiliegenden Fasern und Drähte können Verschleißschäden an den Dichtflächen der Rohre hervorrufen, von denen größere Korrosionsschäden sich gegebenenfalls entwickeln. Vor allem können die relativ langen Fasern im motorischen Betrieb über ihre gesamte Faserlänge ausfasern, so daß von dort allmählich der gesamte Dichtungsring zerstört wird.

Der vorliegenden Erfindung liegt daher die Aufgabe zugrunde, einen Dichtungsring, und zwar insbesondere einen Dichtungsring mit mindestens einer als Gleitfläche dienenden Mantelfläche, vorzugsweise zur Abdichtung gelenkig verbundener Abgasleitungen, zu schaffen, der einfach und kostensparend herzustellen ist, und der eine entsprechende Temperatur- und Medienbeständigkeit sowie eine ausreichende Festigkeit besitzt, so daß er ohne Gefahr einer Zerstörung durch Ausfaserungen oder Ausbrechen von Fasern und Gleitmaterial insbesondere in Abgasleitungen von Verbrennungskraftmaschinen eingesetzt werden kann.

Erfindungsgemäß wird diese Aufgabe durch einen Dichtungsring gelöst der aus einer Mischung eines Gleitmittels mit relativ kurzen Fasern verpreßt ist, wobei die Fasern, je nach Anwendungsfall, eine Länge von 2 bis 8 mm und einen gemittelten Durchmesser von 0,05 bis 0,6 mm besitzen. Aus Fasern dieser Abmessungen und den meist pulver- bis flockenförmigen Gleitmitteln kann einfach eine gleichmäßige Mischung hergestellt werden. Beim Pressen des Dichtringes bilden die erfindungsgemäß verwendeten kurzen Fasern dann einen Faserfilz guter Festigkeit, in deren Zwischenräumen das Gleitmittel gleichmäßig eingelagert ist.

Bevorzugt werden als Fasern Metallfasern oder Metalldrähte eingesetzt, im Prinzip ist es jedoch auch möglich, stattdessen anorganische Fasern oder temperaturbeständige organische Synthesefasern oder die verschiedenen Faserarten untereinander im Gemisch zu verwenden. Die bevorzugt eingesetzten Metallfasern sind aufgrund vor allem ihrer Korrosionsbeständigkeit Edelstahlfasern, im Prinzip können jedoch Fasern aus unlegiertem oder schwach legiertem Stahl, aus Kupfer, Aluminium, Bronze oder Messing einzeln oder im Gemisch verwendet werden. Gegebenenfalls kann mindestens ein Teil der metallischen Fasern mit einem galvanischen Überzug aus vor allem Nickel, Kupfer und/oder Zinn oder aber auch aus Zink und Aluminium versehen sein, die einmal die Fasern vor korrosiven Angriffen besonders schützen und zum anderen beim hohen Pressungsdruck beim Herstellen des Dichtungsringes sich plastisch verformen und fließen und dabei die einzelnen Fasern untereinander besser verbinden.

Als organische Fasern werden bevorzugt Keramikfasern, Glaswollfasern, Schlackenwollfasern oder Steinwollfasern einzeln oder im Gemisch verwendet, und die temperaturbeständigen organischen Synthesefasern sind bevorzugt einzeln oder im Gemisch Polyamid-, Polyaramid-, Polyinid- oder Polyfluorkohlenstoffasern. Gegebenenfalls sind die Oberflächen mindestens eines Teiles der Fasern zur besseren Haftung aneinander und des Gleitmittels durch einen chemischen Prozeß, wie insbesondere einen Ätzprozeß oder einen mechanischen Prozeß, aufgerauht. Im Prinzip kann jedoch auch mindestens ein Teil der Fasern mit organischen Polymeren uberzogen oder chemisch, durch insbesondere Phosphatieren, oberflächenbehandelt sein, so daß ein verbesserter Korrosionsschutz oder ein verbesserter Verbund der Fasern erreicht wird.

Als verwendete Gleitmittel werden bevorzugt die bekannten Festschmierstoffe in Pulver- oder Flockenform, wie vor allem Graphit, Bornitrid, Calciumfluorid, Gleitmetalle, Molybdändisulfid oder Glimmer einzeln oder im Gemisch verwendet. Je nach Anwendungsfall bestehen die verwendeten Faser-Gleitmittelgemische aus 10 bis 90 Gewichtsteilen Fasern und 10 bis 90 Gewichtsteilen Gleitmittel.

Den Faser-Gleitmittel-Gemischen können zusätzlich solche organische Stoffe in Pulver- bis Kurzfaserform mit bevorzugt etwa bis zu 10 Gewichtsteilen zugegeben werden, die in der Betriebshitze unter Bildung koksartiger Zersetzungsprodukte pyrolisieren. Diese Stoffe sind bevorzugt kurze Poylacrylnitrilfasern, die sich unter Bildung von Kohlefasern zersetzen und dann wie Gleitmittel wirken.

Ferner kann das Faser-Gleitmittel-Gemisch bis bevorzugt zu 10 Gewichtsteile solcher Stoffe enthalten, die in der Betriebshitze unter Bildung von solchen Zersetzungsprodukten zerfallen, die dabei ihrerseits vor allem mit den Metallfasern unter Bildung von Oberflächenschutz- oder Gleitschichten chemisch reagieren. Solche Stoffe sind bevorzugt Natriumthiosulfat, Borkarbid ($B_4C$) und/oder Calciumfluorid.

Die Faser-Gleitmittel-Gemische können ferner bis zu etwa 20 Gewichtsteile von festen Bindemitteln enthalten, die, wie insbesondere Phenolharz, unter dem Pressungsdruck und/oder bei erhöhter Temperatur aushärten und dabei die Bindung der Bestandteile untereinander verbessern.

Falls erforderlich, können den Gemischen bis zu 100 Gewichtsteile feste Füllstoffe in pulver- bis feinfaseriger Form zugegeben sein. Solche Füllstoffe sind bevorzugt mineralischen Ursprungs, wie Porzellanerde, Diatomeenerde, Quarzsand, Tonerde oder gemahlene Gläser, oder es können Metallpulver aus bevorzugt Aluminium, Eisen oder Kupfer einzeln oder im Gemisch eingesetzt werden.

Bevorzugt sind im erfindungsgemäßen Dichtungsring Faseranteile, Gleitmittel und Zusatzstoffe über den Querschnitt gleichmäßig verteilt. Die Faseranteile bilden einen festen Faserfilz, und sie sind gleichmäßig von den Gleitmitteln und Zusatzstoffen umgeben. Zur Fertigung dieser Ringe werden zunächst die Mischungen aus den einzelnen Komponenten hergestellt, diese Mischungen werden dann in eine entsprechende Form gegeben und unter entsprechendem hohen Druck von meist bis zu 200 t auf die gewünschte Form verpreßt.

Falls erforderlich, kann jedoch auch im Dichtring im Bereich der Gleitflächen die Gleitmittelkonzentration größer als im nur statisch beanspruchten Dichtflächenbereich sein. Ebenso können im Sinne der Erfindung in den statisch beanspruchten Dichtflächenbereichen die Faseranteile größer als in den Restbereichen sein, oder es können in diesen Bereichen auch andere Faserarten, je nach Anwendungsfällen, eingesetzt werden. Ebenso können die Konzentrationen der Zusatzstoffe, wie insbesondere der Bindemittel oder der Füllstoffe, im mittleren Bereich des Dichtringes größer als in anderen Außenflächenbereichen sein.

Zur Herstellung derartiger Ringe können dann verschiedene Gemische mit unterschiedlichen Faser-, Gleitmittel- und Zusatzanteilen hergestellt werden. Diese werden dann entsprechend in die Form gefüllt, so daß beim Pressen ein Dichtungsring mit der gewünschten Verteilung der einzelnen Komponenten entsteht.

Im Sinne der Erfindung können derartige Ringe jedoch auch aus einheitlichen Mischungen hergestellt werden. Diese werden dann nach dem losen Einfüllen in die Form vor allem Vibrationen, Rotationen und/oder magnetischen Kräften ausgesetzt, so daß Endmischungen mit der gewünschten Verteilung der einzelnen Bestandteile in der Form auftreten.

Durch die Erfindung ist somit ein Dichtungsring für insbesondere die Abdichtung von gelenkig verbundenen Abgasleitungen auf eine einfache und kostensparende Weise geschaffen. Entgegen der bisherigen Ansicht der Fachwelt, daß für derartige Dichtungsringe langsträhnige Fasern verwendet werden müßten, damit der Dichtring überhaupt eine ausreichende Festigkeit erhält, wurde durch unsere Erfindung überraschenderweise gefunden, daß relativ kurze Fasern von meist bis zu nur 2 bis 8 mm Länge völlig ausreichen, um einen Dichtungsring mit ausreichender Festigkeit für derartige Anwendungsfälle zu erhalten. Es entfällt die bisher übliche Bildung des Ringskeletts aus Fasern, das dann mit dem Gleitmaterial durchsetzt und beschichtet werden muß, sondern die Dichtringe können aus einer oder mehreren Mischungen aller Bestandteile untereinander mit gegebenenfalls unterschiedlicher Verteilung durch Verdichtung praktisch einstufig hergestellt werden. Die erfindungsgemäß verwendten kurzen Fasern bilden dann beim Verdichten einen Faserfilz und verleihen dem Dichtring die ausreichende Festigkeit. Auf diesem Faserfilz sind die Gleitmittel und gegebenenfalls die Zusatzstoffe wesentlich fester gebunden, und sie sind in der gewünschten Weise verteilt, so daß die Gefahr von Ausbrüchen weitgehend verhindert ist.

Die Erfindung wird anhand dreier Ausführungsbeispiele und anhand der drei Abbildungen näher erläutert, und zwar zeigen:

Figur 1 den Querschnitt durch eine gelenkig verbundene Auspuffleitung mit einem eingebauten Dichtring entsprechend der Erfindung

Figuren 2 und 3 Querschnitte durch zwei weitere Dichtringe gemäß der Erfindung.

## Beispiel 1

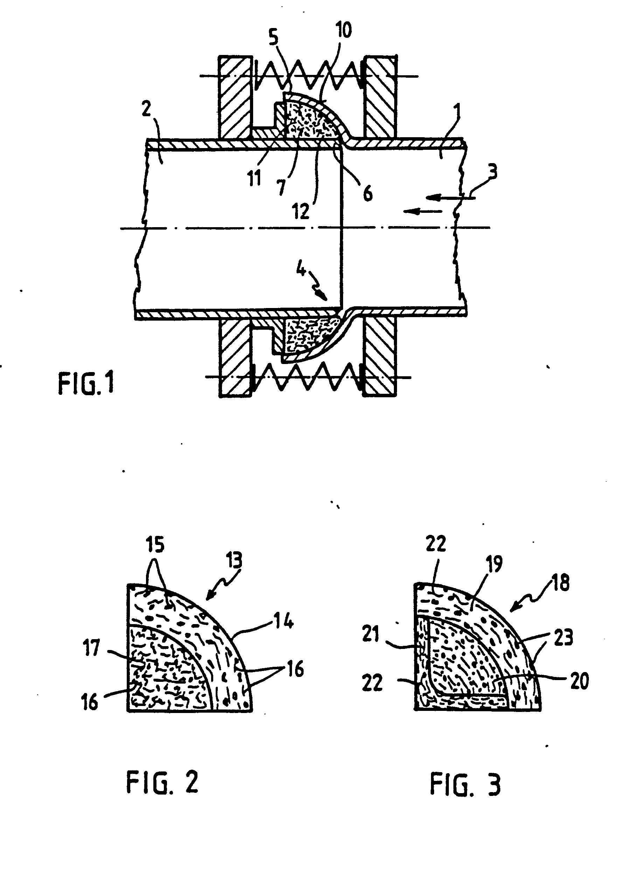

Ausgegangen wird von Edelstahlfasern mit einer mittleren Faserlänge von 3 mm und einem gemittelten Durchmesser von 0,15 mm und Flockengraphit als Gleitmittel. Beide Komponenten werden unter Schütteln und Rühren miteinander im Verhältnis 1 : 1 gemischt und in eine Form mit den Konturen des Dichtringes (7), nach Abbildung 1, unter einer Last von 50 t verpreßt. Der entstandene Dichtring wurde auf seine Beständigkeit gegenüber Temperaturen von 500° C und auf seine Festigkeit getestet. Beide Messungen zeigten gute, für die Verwendung als Auspuffgleitringdichtung geeignete Werte. In der Abbildung 1 ist der Dichtungsring (7) eingebaut. (1) ist das Abgassammelrohr und (2) das Abgasableitrohr, durch das in Strömungsrichtung (3) das Abgas strömt. An der Verbindungsstelle (4) ist das Abgassammelrohr (1) unter Bildung eines Kugelschalensegmentes (5) verformt. Das Ende (6) des Abgassammelrohres (2) ist zylindrisch. Der Dichtungsring (7) ist zwischen den beiden Rohren eingebaut, seine äußere kugelsegmentförmige Mantelfläche (10) dient als Gleitfläche und ist dem verformten Ende (5) des Abgassammelrohres angepaßt. Im Dichtungsring (7) bilden die Edelstahlfasern (11) einen festen Faserfilz, welcher gleichmäßig mit Graphit (12) durchsetzt ist.

Der erfindungsgemäße Dichtring wurde im Motortest und in Simulationsprüfständen untersucht. Er zeigte weder Beschädigungen durch Ausbrüche im Bereich der Oberflächen noch Zersetzungen oder Korrosionserscheinungen.

## Beispiel 2

Aus den beiden Komponenten Edelstahlfaser und Flockengraphit gemäß Beispiel 1 werden zwei Mischungen, nämlich einmal mit 10 Gewichtsteilen Edelstahlfaser und 90 Gewichtsteilen Flockengraphit und zum anderen mit 10 Gewichtsteilen Edelstahlfaser und 90 Gewichtsteilen Flockengraphit hergestellt. Beide Mischungen wurden nacheinander in die Preßform gegeben, so daß die graphitreiche Mischung entsprechend im zu bildenden Gleitflächenbereich des Dichtungsringes (13) angeordnet ist. Nach dem Pressen des Dichtungsringes (13) zeigte die Bestimmung seiner technologischen Eigenschaften und das Ergebnis des Motor- und Simulationstestes eine hervorragende Festigkeit sowie Temperatur- und Korrosionsbeständigkeit. Die Abbildung 2 zeigt den Dichtugnsring (13) gemäß diesem Beispiel 2. Der Gleitflächenbereich (14) besitzt hohe Gleitmittelanteile (15) und entsprechend geringe Faseranteile (16), so daß im Gleitbereich (14) der Ring (13) problemlos gleitet. Der überwiegend statisch beanspruchte Dichtungsteil (17) besitzt hohe Faseranteile (16), die filterartig untereinander verzahnt sind. In diesem Bereich besitzt der Ringe eine hohe Festigkeit und ist aber noch flexibel, so daß er sich den statischen Dichtflächen anpassen kann.

## Beispiel 3

Ausgegangen wird von drei unterschiedlichen Faser-Gleitmittel-Zusatzstoffmischungen.

1. 10 Gewichtsteile Edelstahlfasern (Länge 3 mm, Durchmesser 0,15 mm)
90 Gewichtsteile Flockengraphit und
5 Gewichtsteile Natriumthiosulfat (feinkörnig)
2. 90 Gewichtsteile Edelstahlfasern (Länge 3 mm, Durchmesser 0,15 mm)
30 Gewichtsteile Flockengraphit
30 Gewichtsteile Diatomeenerde (feinkörnig)
5 Gewichtsteile Phenolharzbinder (feinkörnig)
3. 90 Gewichtsteile Edelstahlfaserm (Länge 3 mm, Durchmesser 0,15 mm)
20 Gewichtsteile Polyaramidfaser (Länge 3 mm, Durchmesser 0,15 mm)
20 Gewichtsteile Flockengraphit

Die drei Mischungen werden nacheinander in die Form gegeben, so daß die Mischung 1 den Gleitbereich, die Mischung 2 den Kern und die Mischung 3 den statisch beanspruchten Dichtungsbereich des Dichtungsringes bildet.

Die Prüfung der technologischen Kennwerte und ein Motortest zeigten die gute Eignung des Dichtungsringes.

In der Abbildung 3 sind die drei Zonen (19, 20, 21) des Dichtungsringes zu erkennen. Die Zone (19) mit geringeren Faseranteilen (22) und hohen Gleitmittelanteilen (23) besteht aus der Mischung 1 und bildet den Gleitteil. Die Zone (20) bildet den Kern und besteht aus der Mischung 2 mit einer besonders hohen Festigkeit aufgrund des Bindemittelanteiles.

Die Zone (21) besteht aus der Mischung 3. Sie ist aufgrund ihres hohen Faseranteiles (22) mit elastischen Polyaramidfaseranteilen noch flexibel und kann sich den statisch beanspruchten Dichtungsflächen anpassen.

**Patentansprüche**

1. Dichtungsring insbesondere für die Abdichtung gelenkig verbundener Rohrverbindungen, wie ein hochtemperaturbeständiger Dichtungsring zur Abdichtung gelenkig verbundener Auspuffleitungen in Verbrennungskraftmaschinen, mit mindestens einer als Gleitfläche dienenden Mantelfläche, bestehend aus einem Gleitmaterial mit untereinander verpreßten Fasern und Gleitmitteln, dadurch gekennzeichnet, daß die Fasern (11, 16, 22) eine relativ kurze Faserlänge zwischen 2 und 8 mm und einen gemittelten Durchmesser zwischen 0,05 und 6 mm besitzen.

2. Dichtungsring nach Anspruch 1, dadurch gekennzeichnet, daß der Dichtungsring (7, 13) Metallfasern, anorganische Fasern und/oder organische Synthesefasern einzeln oder im Gemisch enthält.

3. Dichtungsring nach Anspruch 2, dadurch gekennzeichnet, daß die Metallfasern (11) aus legiertem und/oder unlegiertem Stahl, aus Kupfer, Aluminium, Bronze und/oder Messing bestehen.

4. Dichtungsring nach Anspruch 2, dadurch gekennzeichnet, daß mindestens ein Teil der metallischen Fasern (11) einen metallischen Überzug aus Zink, Kupfer, Zinn und/oder Aluminium besitzt.

5. Dichtungsring nach Anspruch 2, dadurch gekennzeichnet, daß die anorganischen Fasern (11, 16, 22) aus Keramik, Glaswolle, Schlackenwolle und/oder Stahlwolle bestehen.

6. Dichtungsring nach Anspruch 2, dadurch gekennzeichnet, daß die organischen Synthesefasern (11, 16, 22) aus temperaturbeständigen Polyamid-, Poloyaramid-, Polyinid-, Polyacrylnitril- und/oder Fluorpolymerfasern bestehen.

7. Dichtungsring nach Anspruch 2, dadurch gekennzeichnet, daß die Oberflächen mindestens eines Teiles der Fasern (11, 16, 22) durch einen chemischen und/oder mechanischen Prozeß aufgerauht sind.

8. Dichtungsring nach Anspruch 2, dadurch gekennzeichnet, daß die Oberflächen mindestens eines Teiles der Fasern (11, 16, 22) einen organischen Überzug auf der Basis eines organischen Bindemittels besitzen.

9. Dichtungsring nach mindestens einem der Ansprüche 1 und 2, dadurch gekennzeichnet, daß der Dichtungsring (7, 13) aus 10 bis 90 Gewichtsteilen Fasern des Anspruches 2 und 10 bis 90 Gewichtsteilen Gleitmittel besteht.

10. Dichtungsring nach den Ansprüchen 1 bis 9, dadurch gekennzeichnet, daß das Gleitmittel (12,15,23) aus Graphit in Flocken- oder Pulverform, aus Bornitrid, Calciumfluorid, Gleitmetall, Molybdändisulfid und/oder Glimmer besteht.

11. Dichtungsring nach mindestens einem der Ansprüche 1 bis 10 dadurch gekennzeichnet daß der Dichtungsring (7, 13) zusätzlich eine organische Faser enthält, die bei Betriebstemperatur des Dichtungsringes verkohlt und Kohlenstoffasern bildet.

12. Dichtungsring nach der Anspruch 9 dadurch gekennzeichnet, daß der Dichtungsring (7, 13) zusätzlich bis zu 10 Gewichtsteile Natriumthiosulfat, Borkarbid ($B_4C$) und/oder Calciumborfluorid enthält.

13. Dichtungsring nach der Anspruch 9 dadurch gekennzeichnet, daß der Dichtungsring (7,13) zusätzlich bis zu 20 Gewichtsteile eines Bindemittels enthält, welches unter Druck und/oder erhöhter Temperatur aushärtbar ist.

14. Dichtungsring nach der Anspruch 9 dadurch gekennzeichnet, daß der Dichtungsring (7,13) zusätzlich bis zu 100 Gewichtsteile eines pulverförmigen bis feinkörnigen Füllstoffes aus Mineralstoffen und/oder Metallen enthält.

15. Dichtungsring nach mindestens einem der Ansprüche 1 bis 14, dadurch gekennzeichnet, daß Faseranteile (11), Gleitmittel (12) und gegebenenfalls Zusatzstoffe über den Querschnitt des Dichtungsringes (7) gleichmäßig verteilt sind.

16. Dichtungsring nach mindestens einem der Ansprüche 1 bis 13, dadurch gekennzeichnet, daß der Gleitmittelanteil (15) im Gleitflächenbereich (14) des Dichtungsringes (13) größer als im lediglich statisch beanspruchten Bereich (17) des Dichtringes (13) ist.

17. Dichtungsring nach Anspruch 16, dadurch gekennzeichnet, daß der Dichtungsring mindestens zwei in axialer Richtung übereinanderliegende Zonen (19, 20, 21) mit unterschiedlichen Faser- (22), Gleitmittel- (23) und gegebenenfalls Zusatzmittelanteilen aufweist.

**Claims**

1. Seal ring especially for sealing articulated pipe joints, such as a high-temperature resistant seal ring for sealing articulated exhaust pipes in internal combustion engines, with at least one circumferential surface acting as a sliding surface, consisting of a low-friction material composed of compacted fibres and lubricants, characterized by the fact that the fibres (11, 16, 22) are of a relatively short lenght of between 2 and 8 mm and have an average diameter of between 0,05 and 0,6 mm.

2. Seal ring according to claim 1, characterized by the fact that the seal ring (7, 13) contains either metallic fibres, inorganic fibres and/or organic synthetic fibres or a mixture thereof.

3. Seal ring according to claim 2, characterized by the fact that the metallic fibres (11) consist of alloyed and/or plain steel, copper, aluminium, bronze and/or brass.

4. Seal ring according to claim 2, characterized by the fact that at least a part of the metallic fibres (11) have a metallic coating of zinc, copper, tin and/or aluminium.

5. Seal ring according to claim 2, characterized by the fact the the inorganic fibres (11, 16, 22) consist of ceramics, glass wool, slag wool and/or steel wool.

6. Seal ring according to claim 2, charaterized by the fact that the organic synthetic fibres (11, 16, 22) consist of temperature-resistant polyamide, polyaramide, polyimide, polyacrylonitrile and/or fluoropolymer fibres.

7. Seal ring according to claim 2, characterized by the fact that the surfaces of at least a part of the fibres (11, 16, 22) have been roughened by a chemical and/or mechanical process.

8. Seal ring according to claim 2, characterized by the fact that the surfaces of at least a part of the fibres (11, 16, 22) have an organic coating based on an organic binding agent.

9. Seal ring according to at least one of claims 1 and 2, characterized by the fact that the seal ring (7, 13) consists of 10 to 90 parts by weight of fibres according to claim 2 and 10 to 90 parts by weight of lubricant.

10. Seal ring according to claims 1 to 9, characterized by the fact that the lubricant (12, 15, 23) consists of flake or powder graphite, boron nitride, calcium fluoride, anti-friction metal, molybdenum disulphide and/or mica.

11. Seal ring according to at least one of claims 1 to 10, characterized by the fact that the seal ring (7, 13) additionally contains an organic fibre which carbonizes at operating temperature of the seal ring and forms carbon fibres.

12. Seal ring according to claim 9, characterized by the fact that the seal ring (7, 13) additionally contains up to 10 parts by weight of sodium thiosulphate, boron carbide ($B_4C$) and/or calcium boron fluoride.

13. Seal ring according to claim 9, charaterized by the fact that the seal ring (7, 13) additionally contains up to 20 parts by weight of a binding agent, which is curable under pressure and/or at elevated temperature.

14. Seal ring according to claim 9, characterized by the fact that the seal ring (7, 13) addionally contains up to 100 parts by weight of a powdery to finegrained filler composed of mineral substances and/or metals.

15. Seal ring according to at least one of claims 1 to 14, characterized by the fact that the fibre components (11), lubricants (12) and if appropriate additives are uniformly dispersed over the cross section of the seal ring (7).

16. Seal ring according to at least one of claims 1 to 13, characterized by the fact that the proportion of lubricant (15) is greater in the area of the sliding surface (14) of the seal ring (13) than in the area subjected only to static stresses (17).

17. Seal ring according to claim 16, characterized by the fact that the seal ring has at least two axially superposed zones (19, 20, 21) with different proportions of fibre (22), lubricant (23) and if appropriate additives.

**Revendications**

1. Joint d'étanchéité, en particulier pour l'étanchéification de liaisons de tubes reliés par une articulation, tel qu'un joint d'étanchéité résistant à haute température pour l'étanchéification de conduits d'échappement reliés par une articulation dans une machine à combustion interne, ledit joint ayant au moins une surface extérieure servant de surface de glissement et se composant d'un matériau antifriction comprenant des fibres et un agent antifriction comprimés ensemble, caractérisé en ce que les fibres (11, 16, 22) ont une longueur relativement courte comprise entre 2 et 8 millimètres et un diamètre moyen compris entre 0,05 et 6 millimètres.

2. Joint d'étanchéité selon la revendication 1, caractérisé en ce que le joint d'étanchéité (7, 13) contient des fibres métalliques, des fibres inorganiques et/ou des fibres de synthèse organiques, isolément ou en mélange.

3. Joint d'étanchéité selon la revendication 2, caractérisé en ce que les fibres métalliques (11) se composent d'acier allié ou non, de cuivre, d'aluminium, de bronze et/ou de laiton.

4. Joint d'étanchéité selon la revendication 2, caractérisé en ce que au moins une partie des fibres métalliques (11) est munie d'un revêtement métallique de zinc, de ciuvre, d'étain et/ou d'aluminium.

5. Joint d'étanchéité selon la revendication 2, caractérisé en ce que les fibres inorganiques (11, 16, 22) se composent de céramique, de laine de verre, de laine de poil de laitier et/ou de laine d'acier.

6. Joint d'étanchéité selon la revendication 2, caractérisé en ce que les fibres de synthèse organiques (11, 16, 22) se composent de fibres de polyamide, de polyaramide, de polymide, de polyacrylnitrile et/ou de fluoropolymère résistant à la température.

7. Joint d'étanchéité selon la revendication 2, caractérise en ce que la surface d'au moins une partie des fibres (11, 16, 22) et rendue rugueuse par un processus chimique et/ou mécanique.

8. Joint de'étanchéité selon la revendication 2, caractérisé en ce que les surfaces d'au moins une partie des fibres (11, 16, 22) comportent un revêtement organique sur la base d'un agent de liaison organique.

9. Joint d'étanchéité selon au moins une des revendications 1 et 2, caractérisé en ce que le joint d'étanchéité (7, 13) comporte 10 à 90 % en poids de fibres de la revendication 2 et 10 à 90 % en poids d'un agent antifriction.

10. Joint d'étanchéité selon une des revendications 1 à 9, caractérisé en ce que l'agent antifriction (12, 15, 23) se compose de graphite sous forme de flocons ou sous forme de poudre, de nitrure de bore, de fluorure de calcium, de métal antifriction, de sulfure de molybdène et/ou mica.

11. Joint d'étanchéité selon au moins une des revendications 1 à 10, caractérisé en ce que le joint d'étanchéité (7, 13) contient en outre une fibre organique, qui, sous l'action de température de fonctionnement du joint d'étanchéité, se carbonise et forme des fibres de carbone.

12. Joint d'étanchéité selon la revendication 9, caractérisé en ce que le joint d'étanchéité (7, 13) contient en outre jusqu'à 10 % en poids de thiosulfate de sodium, de carbure de bore ($B_4C$) et/ou de fluorure de calcium.

13. Joint d'étanchéité selon la revendication 9, caractérisé en ce que le joint d'étanchéité (7, 13) contient en outre jusqu'à 20 % d'un agent de liaison, lequel est durcissable sous l'effet de la pression et/ou d'une température élevée.

14. Joint d'étanchéité selon la revendication 9, caractérisé en ce que le joint d'étanchéité (7, 13) contient en outre jusqu à 100 % en poids d'un matériau de remplissage fait de matériaux minéraux et/ou de métaux sous une forme allant d'une forme pulvérulente à une forme granulaire.

15. Joint d'étanchéité selon au moins une des revendications 1 à 14, caractérisé en ce que l'ensemble des fibres (11), l'agent antifriction (12) et, éventuellement, les matériaux additinnels sont répartis régulièrement dans l'épaisseur du joint d'étanchéité (7).

16. Joint d'étanchéité selon au moins une des revendications 1 à 13, caractérisé en ce que la proportion d'agents antifriction (15) dans la zone des surfaces de glissement (14) du joint d'étanchéité (13) est plus importante que dans la zone (17) du joint d'étanchéité (13) sollicitée uniquement statiquement.

17. Joint d'étanchéité selon la revendication 16, caractérisé en ce que le joint d'étanchéité comporte au moins deux zones (19, 20, 21) superposées dans une direction axiale, lesquelles ont des proportions (22), d'agents de liaison (23) et, le cas échéant, de matériaux additionnels différents.

FIG.1

FIG. 2

FIG. 3